# EUROPÄISCHE PATENTANMELDUNG

(11) **EP 4 851 257 A2**
(43) Veröffentlichungstag der Anmeldung: **09.12.2026**
(21) Anmeldenummer: 26199227.5
(22) Anmeldetag: 18.07.2017
(51) Int. Cl.: C09D 7/42

(54) **WÄSSRIGES BESCHICHTUNGSMITTEL**

(30) Priorität: 21.07.2016 DE 102016008721
(62) Dokumentnummer(n) der früheren Anmeldung(en) nach Art. 76 EPÜ: 20208037.0 / 3 838 993; 17181769.5 / 3 272 817
(71) Anmelder: Brillux GmbH & Co. KG, 48163 Münster (DE)
(72) Erfinder: Hörsting, Ingo, 48317 Drensteinfurt (DE); Leusmann, Jan, 48301 Nottuln (DE); Namazi, Reza, 48165 Münster (DE)
(74) Vertreter: Cohausz & Florack

(57) **Zusammenfassung**

Dargestellt und beschrieben wird ein wässriges Beschichtungsmittel enthaltend, jeweils bezogen auf das Gesamtgewicht, a. 5 bis 30 Gew.% Polymer mit einer mittleren Partikelgröße von 60 bis 300 nm, b. 2 bis 30 Gew.% organischer Füllstoff, c. 0,5 bis 8 Gew.% Mattierungsmittel mit einer mittleren Partikelgröße von 0,5 bis 9 µm, d. 30 bis 70 Gew.% Wasser. Ferner werden ein Verfahren zur Herstellung des erfindungsgemäßen wässrigen Beschichtungsmittels sowie die Verwendung des wässrigen Beschichtungsmittels als Dispersionsfarbe für den Innen- und/oder Außenbereich beschrieben.

## Beschreibung

Die vorliegende Erfindung betrifft ein wässriges Beschichtungsmittel, eine Verfahren zur Herstellung des wässrigen Beschichtungsmittels sowie die Verwendung des wässrigen Beschichtungsmittels als Dispersionsfarbe für den Innen- und/oder Außenbereich.

Vor allem im Automotive-Bereich ist seit einiger Zeit eine Entwicklung zu sogenannten Softfeel-Beschichtungen zu beobachten. Derartige Softfeel-Beschichtungen bewirken ein besonderes Griffempfinden (Haptik), das sich als samtig, weich, gummiartig oder warm umschreiben lässt und als angenehm empfunden wird. Weiterhin verleihen derartige Softfeel-Beschichtungen der Oberfläche ein mattes Erscheinungsbild, das als ansprechend empfunden wird.

Im Automotive-Bereich können derartige Beschichtungen mit speziellen Maschinen und Verfahren, etwa in speziellen Beschichtungsanlagen, die mit erhöhten Temperaturen und/oder vermindertem Druck arbeiten, aufgebracht werden. Daher können viele Materialien und Materialkombinationen eingesetzt werden, die zum Beispiel in Dispersionsfarben für den Innen- und/oder Außenbereich nicht verwendet werden können, da sie sich beispielsweise nicht gut applizieren lassen oder nur schlecht trocknen.

Matte Dispersionsfarben, insbesondere matte Wandfarben, leiden häufig unter einem Effekt, der gemeinhin als "Schreibeffekt" bezeichnet wird. Damit wird ausgedrückt, dass sich auf einer matten Oberfläche schon bei geringen mechanischen Belastungen, beispielsweise Kratzen mit dem Fingernagel, Spuren zeigen. Dieser Effekt ist normalerweise unerwünscht, da dadurch das gewünschte optische Erscheinungsbild gestört wird.

Die WO 2006/032373 A1 beschreibt Beschichtungsmittelzusammensetzungen, die hydroxylgruppenfreie Polyurethane und/oder Polyurethanharnstoffe auf Basis von Polycarbonatpolyolen und Polytetramethylenglykolpolyolen, ionisch modifizierte, hydroxyl- und/oder aminogruppenhaltige Polyurethane und/oder Polyurethanharnstoffe, einen Vernetzer und gegebenenfalls weitere filmbildende Harze enthalten. Diese Beschichtungsmittel werden als hydrolysestabil beschrieben und ergeben einen Softfeel-Effekt. Die WO 2006/032373 A1 macht jedoch keine Angaben über die Größe der in der Beschichtungsmittelzusammensetzung enthaltenen Bestandteile.

Ebenso beschreibt die US 2007/0049683 A1 eine wässrige Beschichtungszusammensetzung für Automotive-Innenteile aus Plastik. Diese Zusammensetzung enthält ein wässriges Polyurethan- oder Acrylharz oder Mischungen davon, ein wässriges Polyurethanharz mit Hydroxygruppen, mikronisiertes Silica mit einer durchschnittlichen Partikelgröße von 10 bis 30 µm, ein Polyethylen Paraffinwachs mit einer durchschnittlichen Partikelgröße von 30 - 100 nm, ein Polysiloxan, einen Polyoxyethylen Sorbitanmonooleat-Stabilisator, gegebenenfalls verkapselte, aromatische Partikel zur Desodorierung sowie einen trifunktionellen Hexamethylendiisocyanat Vernetzer. Diese Zusammensetzung enthält jedoch kein spezielles Mattierungsmittel. Weiterhin ist die Zusammensetzung speziell für Plastikkomponenten im Automotive-Innenbereich ausgelegt, eine Eignung als Dispersionsfarbe im Innen- und/oder Außenbereich ist nicht erwähnt.

Aufgabe der Erfindung ist es, ein wässriges Beschichtungsmittel bereitzustellen, das als Dispersionsfarbe, insbesondere im Innen- und/oder Außenbereich angewendet werden kann.

Eine weitere Aufgabe der Erfindung ist es, ein wässriges Beschichtungsmittel bereitzustellen, das eine gute Haftung an Oberflächen zeigt, auf die üblicherweise Dispersionsfarben aufgetragen werden, beispielsweise Beton, Stein, Tapete, insbesondere Papier, Glasgewebe, Kunststoff, Leinwand, Putz.

Eine weitere Aufgabe der Erfindung ist es, ein wässriges Beschichtungsmittel bereitzustellen, das sich gut mit häufig gebrauchten Malerutensilien wie Pinseln und/oder Farbwalzen auftragen lässt.

Eine weitere Aufgabe der Erfindung ist es, ein wässriges Beschichtungsmittel bereitzustellen, das einen Softfeel-Effekt, insbesondere in Bezug auf das Griffempfinden und/oder auf den optischen Eindruck, zeigt.

Eine weitere Aufgabe der Erfindung ist es, ein wässriges Beschichtungsmittel bereitzustellen, das eine gute Widerstandfähigkeit gegen mechanische Einwirkungen aufweist und insbesondere nur einen geringen "Schreibeffekt" zeigt.

Alle oder einige dieser Aufgaben werden durch die in Satz 1 und 19 angegebenen wässrigen Beschichtungsmittel, das in Satz 16 angegebene Verfahren sowie die in Satz 20 angegebene Verwendung gelöst.

Vorteilhafte Ausgestaltungen sind in den abhängigen Sätzen angegeben und werden nachfolgend im Einzelnen erläutert.

Das erfindungsgemäße wässrige Beschichtungsmittel enthält, jeweils bezogen auf das Gesamtgewicht des Beschichtungsmittels,
a. 5 bis 30 Gew.% Polymer mit einer mittleren Partikelgröße von 60 bis 300 nm,
b. 2 bis 30 Gew.% organischen Füllstoff,
c. 0,5 bis 8 Gew.% Mattierungsmittel mit einer mittleren Partikelgröße von 0,5 bis 9 µm,
d. 30 bis 70 Gew.% Wasser.

Überraschend wurde gefunden, dass die Kombination von 5 bis 30 Gew.% eines Polymers mit einer mittleren Partikelgröße von 60 bis 300 nm mit 2 bis 30 Gew.% eines organischen Füllstoffs und 0,5 bis 8 Gew.% Mattierungsmittel mit einer mittleren Partikelgröße von 0,5 bis 9 µm in 30 bis 70 Gew.% Wasser ein wässriges Beschichtungsmittel ergibt, das einen angenehmen Softfeel-Effekt sowohl in Bezug auf das Griffempfinden als auch in Bezug auf den optischen Eindruck zeigt und/oder als Dispersionsfarbe im Innen- und/oder Außenbereich angewendet werden kann und/oder eine gute Haftung auf Beton, Stein, Tapete und/oder Putz zeigt und/oder sich gut, insbesondere gleichmäßig, mit üblichen Malerutensilien wie Pinsel und/oder Farbwalze auftragen lässt und/oder eine gute Widerstandsfähigkeit gegen mechanische Einwirkungen aufweist. Dies war vor allem insofern überraschend, als dass Beschichtungsmittel mit einem angenehmen optischen Eindruck, insbesondere einem matten optischen Eindruck, üblicherweise eine geringe Widerstandsfähigkeit gegen mechanische Einwirkungen zeigen.

Die mittlere Partikelgröße kann dabei insbesondere den D₅₀-Wert bezeichnen. Der D₅₀-Wert kann insbesondere die Größe bezeichnen, bei der 50 %, z.B. 50 Gew.%, kleiner sind als die angegebene Größe. Beispielsweise würden dann 50 %, z.B. 50 Gew.%, der Teilchen eine theoretische Siebweite passieren. Methoden zur Bestimmung der mittleren Partikelgröße, insbesondere des D₅₀-Werts, sind dem Fachmann bekannt. Die mittlere Partikelgröße, insbesondere der D₅₀-Wert, kann beispielsweise durch Erstellung einer Partikelgrößenverteilung ermittelt werden. Die Messung kann zum Beispiel mittels Lichtstreuung, insbesondere mittels Laserdiffraktometrie oder Photonenkorrelationsspektroskopie, durchgeführt werden. Insbesondere kann die mittlere Partikelgröße, insbesondere der D₅₀-Wert, in einem flüssigen Medium, beispielsweise einem wässrigen Medium, gemessen werden. Die Messung kann insbesondere gemäß der ISO 13321, insbesondere der ISO13321:1996, und/oder der ISO 22412, insbesondere der ISO 22412:2008, durchgeführt werden. Beispielsweise kann zur Bestimmung der mittleren Partikelgröße, insbesondere des D₅₀-Werts, ein Malvern Mastersizer 2000 oder 3000 eingesetzt werden. Weitere Möglichkeiten zur Bestimmung der mittleren Partikelgröße, insbesondere des D₅₀-Werts, stellen Licht- und/oder Laserbeugung dar. Ferner kann die mittlere Partikelgröße, insbesondere der D₅₀-Wert, mit Hilfe einer Ultrazentrifuge oder mit chromatographischen Methoden, zum Beispiel der Capillary Hydrodynamic Fractionation (CHDF) bestimmt werden.

Als Mattierungsmittel werden insbesondere Additive für Beschichtungsstoffe bezeichnet, die die Oberfläche der Beschichtung so beeinflussen, dass deren Glanzgrad, insbesondere der Reflektometerwert, sinkt.

Das wässrige Beschichtungsmittel enthält 5 bis 30 Gew.%, bevorzugt 8 bis 17 Gew.%, weiter bevorzugt 10 bis 15 Gew.%, besonders bevorzugt 11 bis 13 Gew.%, Polymer, jeweils bezogen auf das Gesamtgewicht des Beschichtungsmittels. Die Angaben bezüglich des Gehalts an Polymer in dem wässrigen Beschichtungsmittel beziehen sich jeweils auf das Polymer als Feststoffanteil. Bevorzugt wird das Polymer bei der Herstellung eines wässrigen Beschichtungsmittels jedoch in Form einer Dispersion, insbesondere einer wässrigen Dispersion, zugegeben. Vorteilhafterweise enthalten diese Polymerdispersionen, insbesondere die wässrigen Polymerdispersionen, 40 bis 70 Gew.%, bevorzugt 45 bis 60 Gew.%, weiter bevorzugt 45 bis 55 Gew.%, besonders bevorzugt 50 Gew.%, Polymer als Feststoffgehalt. Wird das Polymer als wässrige Polymerdispersion zugegeben, wird das Wasser der Polymerdispersion als Teil des gesamten Wassergehalts des wässrigen Beschichtungsmittels gerechnet. Liegt das Polymer beispielsweise als 50%ige Dispersion in Wasser vor, so enthält das wässrige Beschichtungsmittel entsprechend 10 bis 60 Gew.%, bevorzugt 16 bis 34 Gew.%, weiter bevorzugt 20 bis 30 Gew.%, besonders bevorzugt 22 bis 26 Gew.%, der Polymerdispersion und 25 bis 50 Gew.% Wasser, jeweils bezogen auf das Gesamtgewicht des wässrigen Beschichtungsmittels. Wässrige Beschichtungsmittel enthaltend Polymer in diesen Mengen haben gute Verarbeitungseigenschaften, insbesondere eine gute Auftragbarkeit, gezeigt.

Als Polymer kommen verschiedene Polymere für das wässrige Beschichtungsmittel in Frage. Das Polymer kann ein Homopolymer oder ein Copolymer sein, wobei für Copolymere verschiedene Architekturen wie statistische Copolymere, Gradientcopolymere, alternierende Copolymere, Block- oder Segmentcopolymere und Pfropfcopolymere denkbar sind.

Als Monomere, die das Polymer des erfindungsgemäßen Beschichtungsmittels enthält oder aus denen es aufgebaut ist oder auf denen es basiert, kommen insbesondere Monomere mit einer Kohlenstoff-Kohlenstoff-Doppelbindung in Frage. Beispiele für Monomere mit einer Kohlenstoff-Kohlenstoff-Doppelbindung sind Acrylsäure und deren Ester oder Amide wie Acrylsäuremethylester, Acrylsäureethylester, Acrylsäurepropylester und Acrylsäurebutylester, Acrylamid, Acrylsäuremethylamid, Methacrylsäure und deren Ester und Amide wie Methacrylsäuremethylester, Methacrylsäureethylester, Methacrylsäurepropylester und Methacrylsäurebutylester, Methacrylamid, Methacrylsäuremethylamid, Carbonsäurevinylester wie Vinylacetat, Vinylpropionat, N-Vinylpyrrolidon und Derivate hiervon, ungesättigte Carbonsäuren, deren Ester, Amide und Anhydride, sowie ethylenisch ungesättigte Verbindungen wie Acrylnitril, Vinylchlorid und Styrol. Homopolymere und Copolymere, wobei die Copolymere die vorgenannten Architekturen aufweisen können, auf Basis der vorgenannten Monomere ergeben für das erfindungsgemäße wässrige Beschichtungsmittel geeignete Polymere.

Weitere für das erfindungsgemäße wässrige Beschichtungsmittel geeignete Polymere sind Polyurethane und Polyester-Polyurethane.

Ferner können auch Mischungen der vorgenannten Polymere als Polymer im erfindungsgemäßen wässrigen Beschichtungsmittel eingesetzt werden.

Bevorzugt ist das Polymer ausgewählt aus der Gruppe bestehend aus Polymere basierend auf Carbonsäurevinylester, insbesondere Vinylacetat, Vinylpropionat, N-Vinylpyrrolidon und Derivate hiervon, ungesättigte Carbonsäuren, deren Ester, Amide und Anhydride, insbesondere Acrylsäure und Methacrylsäure sowie deren Ester und Amide, und ethylenisch ungesättigte Verbindungen wie Acrylnitril, Vinylchlorid, Styrol, und Copolymere der vorgenannten Monomere, Polyurethane, Polyester-Polyurethane und Mischungen davon.

Zweckmäßigerweise liegt das Polymer in Form einer wässrigen Dispersion mit einem Feststoffgehalt von 40 bis 70 Gew.%, bevorzugt 45 bis 60 Gew.%, weiter bevorzugt 45 bis 55 Gew.%, besonders bevorzugt 50 Gew.%, vor. Diese wässrige Dispersion kann insbesondere eine Brookfield Viskosität bei 25°C von 1000 bis 10000 mPas, insbesondere von 1500 bis 8000 mPas, und/oder einen pH Wert von 7 bis 11,4, insbesondere von 8 bis 9 aufweisen.

Das Polymer weist zudem vorteilhafterweise eine Glasübergangstemperatur T_{g}, gemessen nach ISO 16805, insbesondere ISO 16805:2003, von -20 bis 20°C, bevorzugt von -10 bis 10°C, weiter bevorzugt von -5 bis 5 °C, besonders bevorzugt von 0 bis 5 °C, auf.

Bevorzugt weist das Polymer im erfindungsgemäßen wässrigen Beschichtungsmittel eine mittlere Partikelgröße von 70 bis 200 nm, bevorzugt von 80 bis 170 nm, weiter bevorzugt von 100 bis 150 nm, besonders bevorzugt von 120 nm, auf. Für die mittlere Partikelgröße und deren Bestimmung gilt das voranstehend Gesagte.

Zweckmäßigerweise ist das Polymer im erfindungsgemäßen wässrigen Beschichtungsmittel ein Copolymer. Insbesondere ist es vorteilhaft, wenn das Copolymer mindestens Acrylsäure oder Acrylsäurederivate wie Acrylsäureester und mindestens ein ethylenisch ungesättigtes Monomer wie beispielsweise Styrol oder Acrylnitril enthält oder daraus besteht. Optimale Ergebnisse stellen sich ein, wenn das Polymer im erfindungsgemäßen wässrigen Beschichtungsmittel ein Styrolacrylat-Copolymer ist, insbesondere enthaltend einen oder mehrere Acrylsäureester und Styrol, insbesondere mit einer mittleren Partikelgröße von 120 nm. Für die mittlere Partikelgröße und deren Bestimmung gilt das voranstehend Gesagte.

Zudem kann das Polymer im erfindungsgemäßen wässrigen Beschichtungsmittel auch einen Vernetzer, insbesondere einen ionischen Vernetzer, enthalten.

Es hat sich herausgestellt, dass wässrige Beschichtungsmittel, die derartige Polymere enthalten, eine gute Haftung auf verschiedenen Oberflächen, insbesondere auf Beton, Stein, Tapete, Papier, Glasgewebe, Kunststoff, Leinwand oder Putz, zeigen können. Ferner lassen sich diese wässrigen Beschichtungsmittel gut mit gängigen Malerutensilien auftragen. Zudem weisen sie eine gute Widerstandskraft gegen mechanische Einwirkungen auf.

Das wässrige Beschichtungsmittel enthält ferner 2 bis 30 Gew.%, bevorzugt 5 bis 25 Gew.%, weiter bevorzugt 10 bis 20 Gew%, besonders bevorzugt 13 bis 18 Gew.%, organischen Füllstoff, jeweils bezogen auf das Gesamtgewicht des Beschichtungsmittels. Derartige Mengen an organischem Füllstoff ergeben eine Oberfläche mit einem angenehmen Griffempfinden.

Als organischer Füllstoff kommen verschiedene Stoffe in Frage. Bevorzugt ist der organische Füllstoff ausgewählt aus der Gruppe bestehend aus Polyurethanpartikel, Polymethylmethacrylatpartikel, polymere Mikrohohlkugeln, Cellulosefasern, Textilfasern, Korkmehl und Mischungen davon. Bevorzugt werden als organischer Füllstoff Polyurethanpartikel, insbesondere vernetzte Polyurethanpartikel, eingesetzt. Derartige organische Füllstoffe lassen sich gut in das wässrige Beschichtungsmittel integrieren und zeigen auch im trockenen Film wenig Entmischungseffekte.

Zweckmäßigerweise weist der organische Füllstoff eine mittlere Partikelgröße von 1 bis 50 µm, bevorzugt von 5 bis 40 µm, weiter bevorzugt von 20 bis 40 µm, noch weiter bevorzugt 25 bis 35 µm, besonders bevorzugt 28 bis 33 µm, insbesondere 30 µm, auf. Organische Füllstoffe mit derartigen Partikelgrößen führen zu Oberflächen mit einem angenehmen Griffempfinden. Überraschend hat sich zudem gezeigt, dass organische Füllstoffe mit derartigen Partikelgrößen den resultierenden Oberfläche zudem eine gute Widerstandskraft gegen mechanische Einwirkungen verleihen. Für die mittlere Partikelgröße und deren Bestimmung gilt das voranstehend Gesagte.

Weiterhin enthält das wässrige Beschichtungsmittel 0,5 bis 8 Gew.%, bevorzugt 1 bis 6 Gew.%, weiter bevorzugt 2 bis 4 Gew.%, jeweils bezogen auf das Gesamtgewicht des Beschichtungsmittels, Mattierungsmittel mit einer mittleren Partikelgröße von 0,5 bis 9 µm. Die Einbindung eines Mattierungsmittels hilft dabei, insbesondere den gewünschten optischen Eindruck, aber auch das gewünschte Griffempfinden zu erzeugen. Für die mittlere Partikelgröße und deren Bestimmung gilt das voranstehend Gesagte.

Als Mattierungsmittel kommen die verschiedensten Substanzen in Frage. Bevorzugt ist das Mattierungsmittel ausgewählt aus der Gruppe bestehend aus pyrogene Kieselsäure, Polymethylharnstoff, keramische Mikrokugeln, Diatomeenerde, Quarzmehle, Talkum und Wachsadditive wie Polyethylenwachse. Bevorzugt wird Polymethylharnstoff als Mattierungsmittel eingesetzt. Diese Mattierungsmittel haben sich als geeignet erwiesen, um die voranstehend beschriebenen Effekte zu erzeugen.

Vorteilhafterweise weist das Mattierungsmittel eine mittlere Partikelgröße von 1 bis 8 µm, bevorzugt von 2 bis 6 µm, weiter bevorzugt von 4 µm, auf. Dadurch können sowohl der gewünschte optische Eindruck als auch das Griffempfinden gut eingestellt werden. Für die mittlere Partikelgröße und deren Bestimmung gilt das voranstehend Gesagte.

Erfindungsgemäße wässrige Beschichtungsmittel enthaltend eine Kombination aus den vorgenannten Bestandteilen haben vorteilhafte Eigenschaften. Insbesondere weisen mit dem erfindungsgemäßen wässrigen Beschichtungsmittel erstellte Beschichtungen ein angenehmes Griffempfinden auf. Die mit dem erfindungsgemäßen wässrigen Beschichtungsmittel erstellten Beschichtungen weisen zudem einen matten optischen Eindruck auf und können insbesondere einen Glanzgrad, insbesondere einen Reflektometerwert, gemäß DIN EN 13300, insbesondere gemäß DIN EN 13300:2002-11, und gemessen nach DIN EN ISO 2813, insbesondere nach DIN EN ISO 2813:2015-02, von kleiner als 10, insbesondere kleiner als 5, bei einem Messwinkel von 85° aufweisen.

Ferner haften erfindungsgemäße wässrige Beschichtungsmittel sehr gut auf diversen Untergründen wie Beton, Stein, Tapete und/oder Putz. Außerdem lassen sie sich sehr gut als Dispersionsfarbe im Innen- und/oder Außenbereich anwenden. Dabei zeigen sie insbesondere eine gute Auftragbarkeit, beispielsweise mit typischen Malerutensilien wie Pinsel und/oder Farbwalzen. Außerdem haben sie eine hohe Widerstandsfähigkeit gegen mechanische Einwirkungen, insbesondere zeigen sie nur einen geringen Schreibeffekt. Derartige Effekte wurden insbesondere mit wässrigen Beschichtungsmitteln erzielt, die ein Polymer mit einer mittleren Partikelgröße von 100 bis 150 nm, bevorzugt 120 nm, insbesondere ein Styrolacrylat, einen organischen Füllstoff, insbesondere vernetzte Polyurethanpartikel, mit einer mittleren Partikelgröße von 28 bis 33 µm, bevorzugt 30 µm, und ein Mattierungsmittel, insbesondere Polymethylharnstoff, mit einer mittleren Partikelgröße von 2 bis 6 µm, bevorzugt 4 µm, enthalten.

Ferner enthält das wässrige Beschichtungsmittel bevorzugt mindestens einen anorganischen Füllstoff und/oder Pigment. Insbesondere kann das wässrige Beschichtungsmittel 1 bis 20 Gew.%, bevorzugt 3 bis 17 Gew.%, weiter bevorzugt 5 bis 15 Gew.%, besonders bevorzugt 8 bis 12 Gew.%, mindestens einen anorganischen Füllstoff und/oder Pigment enthalten, jeweils bezogen auf das Gesamtgewicht des Beschichtungsmittels. Anorganische Füllstoffe können insbesondere dabei helfen, den Abrieb und/oder die Abnutzung der mit dem erfindungsgemäßen Beschichtungsmittel erstellten Beschichtungen zu reduzieren.

Als mindestens ein anorganischer Füllstoff kommen verschiedene Substanzen in Frage. Vorteilhafterweise ist der mindestens eine anorganische Füllstoff ausgewählt aus der Gruppe bestehend aus Kieselgur, Dolomit, Bariumsulfat, Feldspat, Quarz, Calciumcarbonat, Glimmer, Kaolin, kalziniertes Kaolin, Talkum, Aluminiumsilikate und Mischungen davon. Dabei ist es zweckmäßig, wenn die mittlere Partikelgröße des mindestens einen anorganischen Füllstoff kleiner ist als die mittlere Partikelgröße des organischen Füllstoffs.

Als Pigmente können ebenfalls verschiedene Substanzen eingesetzt werden. Beispielsweise können nur anorganische oder nur organische Pigmente oder Mischungen von anorganischen und organischen Pigmenten eingesetzt werden.

Bevorzugt ist das Pigment ausgewählt aus der Gruppe bestehend aus Titandioxid, Eisenoxidgelb, Arylid (Monoazo), Bismutvanadat, Perinone, Rutil-Zinn-Zink, Chinacridone, Diketo-pyrrolo-pyrrol, Eisenoxidrot, Phthalocyaninblau, Dioxazin, Kobaltblau, Ultramarinblau, Phthalocyaningrün, Chromoxidgrün, Kobaltgrün, Farbruss, Eisenoxidschwarz, Pyrazolo-Chinazolon, Naphtol-AS-Monoazopigment und Mischungen davon.

Als anorganische Pigmente können beispielsweise Oxide wie Titandioxid, Eisenoxide, z.B. P.Y. 42, P.R. 101, P.Bk. 11, Chromoxidgrün, z.B. P.G. 17, Mischphasenpigmente z.B. Cobaltoxide Blau P.B. 28 und Grün P.G. 50, Bismutvanadat P.Y. 184, Rutil-Zinn-Zink P.O. 216, Silikate, z.B. Ultramarinblau P.B. 29 und Kohlenstoff, z.B. Ruß P.Bk. 7 verwendet werden.

Als organische Pigmente können zum Beispiel Azopigmente, z.B. Arylidgelb (Monoazo) P.Y. 74, Polycyclische Pigmente, z.B. Chinacridone P.R. 122, Perinone P.O. 43, Pyrazolo-Chinazolon P.O. 67, Diketo-Pyrrolo-Pyrrol (DPP) P.R. 254, Dioxazine P.V. 23 und Metallkomplexpigmente, z.B. Kupferphthalocyanine Blau P.B. 15:3 und Grün P.G. 7 eingesetzt werden.

Die für die Beispiele verwendeten Bezeichnungen der anorganischen und organischen Pigmente entsprechen den Generic Names des Colour Index der British Society of Dyers and Colourists.

Durch die Verwendung von Pigmenten können farbige wässrige Beschichtungsmittel hergestellt werden, die im Wesentlichen das ganze Farbspektrum abdecken. Die Verwendung von Füllstoffen wirkt in dieser Hinsicht vor allem bei der Herstellung von weißen wässrigen Beschichtungsmitteln unterstützend.

Zusätzlich kann das erfindungsgemäße wässrige Beschichtungsmittel auch noch weitere übliche Zusätze und/oder Additive enthalten. Insbesondere kann das wässrige Beschichtungsmittel zusätzlich ein oder mehrere weitere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Lösungsmittel und Verdicker enthalten.

Zusätze und/oder Additive können insgesamt in einer Menge von 0,1 bis 30 Gew.%, bevorzugt 0,5 bis 20 Gew.%, weiter bevorzugt 1 bis 10 Gew.%, besonders bevorzugt 1,5 bis 5 Gew.%, jeweils bezogen auf das Gesamtgewicht des wässrigen Beschichtungsmittels, enthalten sein.

Beispiele für Verdickungsmittel sind Alkoholalkoxylate, Ethylenoxid-Propylenoxid-Copolymere, Maleinsäureanhydrid-Diisobutylen-Copolymere, Polyacryl- und Polymethacrylsäure und deren Salze, Methylcellulosen, Carboxymethylcellulosen, Hydroxymethylcellulosen, Polyurethane, Alkalimetallphosphate und Salze modifizierter Phosphorsäuren, sowie deren Mischungen.

Beispiele für Entschäumer sind Polyglykole, Triglyceride, Polysiloxan-Polyether-Copolymere und Silikonöle.

Beispiele für Hydrophobiermittel sind insbesondere oligomere und polymere Siloxane und Silikonharze.

Beispiele für Konservierungsmittel sind Isothiazoline.

Die Erfindung stellt ferner ein Verfahren zur Herstellung des erfindungsgemäßen wässrigen Beschichtungsmittels bereit, welches die folgenden Schritte umfasst:
a. Bereitstellen einer Zusammensetzung enthaltend, jeweils bezogen auf das Gesamtgewicht der Zusammensetzung,
   i. 5 bis 30 Gew.% Polymer mit einer mittleren Partikelgröße von 60 bis 300 nm,
   ii. 2 bis 30 Gew.% organischer Füllstoff,
   iii. 0,5 bis 8 Gew.% Mattierungsmittel mit einer mittleren Partikelgröße von 0,5 bis 9 µm,
   iv. 30 bis 70 Gew.% Wasser,
b. Dispergieren der in a. genannten Komponenten.

Die angeführten Schritte können in beliebiger Reihenfolge durchgeführt werden, vorzugsweise werden sie in der angegebenen Reihenfolge durchgeführt.

Zum Dispergieren der Bestandteile können dem Fachmann bekannte Vorrichtungen verwendet werden. Beispielsweise können Turbomills oder Dissolver, bevorzugt Dissolver, hierfür verwendet werden.

Das im Zusammenhang mit dem erfindungsgemäßen wässrigen Beschichtungsmittel zum Polymer Gesagte gilt gleichermaßen auch für das Polymer des erfindungsgemäßen Verfahrens.

Das im Zusammenhang mit dem erfindungsgemäßen wässrigen Beschichtungsmittel zum organischen Füllstoff Gesagte gilt gleichermaßen auch für den organischen Füllstoff des erfindungsgemäßen Verfahrens.

Das im Zusammenhang mit dem erfindungsgemäßen wässrigen Beschichtungsmittel zum Mattierungsmittel Gesagte gilt gleichermaßen auch für das Mattierungsmittel des erfindungsgemäßen Verfahrens.

Insbesondere kann die Zusammensetzung des erfindungsgemäßen Verfahrens 8 bis 17 Gew.%, bevorzugt 10 bis 15 Gew.%, weiter bevorzugt 11 bis 13 Gew.%, Polymer und/oder 5 bis 25, bevorzugt 10 bis 20 Gew.%, weiter bevorzugt 13 bis 18 Gew.%, organischen Füllstoff und/oder 1 bis 6 Gew.%, bevorzugt 2 bis 4 Gew.%,

Mattierungsmittel und/oder zusätzlich mindestens einen anorganischen Füllstoff und/oder Pigment, bevorzugt 1 bis 20 Gew.%, weiter bevorzugt 3 bis 17 Gew.%, noch weiter bevorzugt 5 bis 15 Gew.%, besonders bevorzugt 8 bis 12 Gew.%, mindestens einen anorganischen Füllstoff und/oder Pigment, enthalten, jeweils bezogen auf das Gesamtgewicht der Zusammensetzung.

Für den mindestens einen anorganischen Füllstoff und/oder Pigment der Zusammensetzung des erfindungsgemäßen Verfahrens gilt das voranstehend Gesagte.

Ferner kann die Zusammensetzung des erfindungsgemäßen Verfahrens auch 0,1 bis 30 Gew.%, bevorzugt 0,5 bis 20 Gew.%, weiter bevorzugt 1 bis 10 Gew.%, besonders bevorzugt 1,5 bis 5 Gew.%, jeweils bezogen auf das Gesamtgewicht des wässrigen Beschichtungsmittels, Zusätze und/oder Additive wie zum Beispiel Entschäumer, Dispergiermittel, Netzmittel, Konservierungsmittel, Stabilisatoren, Oberflächenschutzmittel, Hydrophobiermittel, Lösungsmittel und Verdicker enthalten.

Gegenstand der Erfindung ist ferner ein wässriges Beschichtungsmittel, das durch das erfindungsgemäße Verfahren erhältlich ist.

Das wässrige Beschichtungsmittel ist für verschiedene Verwendungen geeignet. Insbesondere eignet es sich als Dispersionsfarbe. Dementsprechend ist die Verwendung des erfindungsgemäßen wässrigen Beschichtungsmittels als Dispersionsfarbe für den Innen- und/oder Außenbereich ebenfalls Gegenstand der Erfindung.

Die Erfindung wird im Folgenden durch Beispiele näher erläutert, die jedoch nur der Veranschaulichung dienen und nicht limitierend sind.

### BEISPIEL

Ein wässriges Beschichtungsmittel mit der folgenden, in Tabelle 1 wiedergegebenen Formulierung wurde hergestellt durch Mischen der in Tabelle 1 angegebenen Bestandteile, dosierte Angaben jeweils in Gew.%.

**Tabelle 1: Rezeptur des wässrigen Beschichtungsmittels**

| **Bestandteil** | **Rezeptur** |
|---|---|
| Styrolacrylat, 120 nm mittlere Partikelgröße, als 50%ige wässrige Dispersion | 25 |
| Vernetzte Polyurethanpartikel, 30 µm mittlere Partikelgröße | 15 |
| Entschäumer | 0,34 |
| Dispergiermittel | 0,23 |
| Konservierungsmittel | 0,16 |
| Verdicker | 1,9 |
| Mattierungsmittel, 4 µm mittlere Partikelgröße | 3 |
| Füllstoff, mittlere Partikelgröße kleiner 30 µm | 5,5 |
| Pigment, mittlere Partikelgröße kleiner 30 µm | 4,13 |
| Wasser | 44,74 |

Eine Zusammensetzung mit der in Tabelle 1 angegebenen Rezeptur wurde mit Hilfe eines Dissolvers dispergiert. Das entstandene wässrige Beschichtungsmittel wurde als Dispersionsfarbe im Innenbereich auf Putz sowie auf Tapete verwendet. Das wässrige Beschichtungsmittel sowie die daraus entstandene Beschichtung zeigte eine gute Haftung sowohl auf Putz als auch auf Tapete. Ferner ließ es sich auch gut und insbesondere gleichmäßig mit einem Pinsel und/oder einer Farbwalze auftragen. Die nach Trocknung entstandene Beschichtung zeigte bei einem Messwinkel von 85° einen Glanzgrad, insbesondere Reflektometerwert, nach DIN EN 13300, insbesondere DIN EN 13300:2002-11, gemessen nach DIN EN ISO 2813, insbesondere nach DIN EN ISO 2813:2015-02, von weniger als 5. Zudem wies die Beschichtung ein angenehmes Griffempfinden auf. Ferner war sie gegen mechanische Einwirkungen sehr beständig. Gegenstand der Erfindung sind ferner die in den nachstehenden Sätzen beschriebenen Ausführungsformen der Erfindung:
1. Wässriges Beschichtungsmittel enthaltend, jeweils bezogen auf das Gesamtgewicht des Beschichtungsmittels,
   a. 5 bis 30 Gew.% Polymer mit einer mittleren Partikelgröße von 60 bis 300 nm,
   b. 2 bis 30 Gew.% organischer Füllstoff,
   c. 0,5 bis 8 Gew.% Mattierungsmittel mit einer mittleren Partikelgröße von 0,5 bis 9 µm,
   d. 30 bis 70 Gew.% Wasser.
2. Wässriges Beschichtungsmittel gemäß Satz 1, **dadurch gekennzeichnet, dass** das Beschichtungsmittel 8 bis 17 Gew.%, insbesondere 10 bis 15 Gew.% oder 11 bis 13 Gew.%, Polymer enthält, jeweils bezogen auf das Gesamtgewicht des Beschichtungsmittels.
3. Wässriges Beschichtungsmittel gemäß einem der Sätze 1 oder 2, **dadurch gekennzeichnet, dass** das Polymer ausgewählt ist aus der Gruppe bestehend aus Polymere basierend auf Carbonsäurevinylester, insbesondere Vinylacetat, Vinylpropionat, N-Vinylpyrrolidon und Derivate hiervon, ungesättigte Carbonsäuren, deren Ester, Amide und Anhydride, insbesondere Acrylsäure und Methacrylsäure sowie deren Ester und Amide, und ethylenisch ungesättigte Verbindungen wie Acrylnitril, Vinylchlorid, Styrol, und Copolymere der vorgenannten Monomere, Polyurethane, Polyester-Polyurethane und Mischungen davon.
4. Wässriges Beschichtungsmittel gemäß einem der vorstehenden Sätze, **dadurch gekennzeichnet, dass** das Polymer in Form einer wässrigen Dispersion mit einem Feststoffgehalt von 40 bis 70 Gew.-%, insbesondere 45 bis 60 Gew.-% oder 45 bis 55 Gew.-% oder 50 Gew.%, vorliegt, insbesondere mit einer Brookfield Viskosität bei 25°C von 1000 bis 10000 mPas, insbesondere von 1500 bis 8000 mPas, und/oder einem pH Wert von 7 bis 11,4, insbesondere von 8 bis 9, und/oder eine Glasübergangstemperatur T_{g}, gemessen nach DIN EN ISO 16805:2005-07, von -20 bis 20°C, insbesondere von -10 bis 10°C oder von -5 bis 5 °C oder von 0 bis 5 °C, aufweist und/oder ein Styrolacrylat-Copolymer ist.
5. Wässriges Beschichtungsmittel gemäß einem der vorstehenden Sätze, **dadurch gekennzeichnet, dass** das Polymer eine mittlere Partikelgröße von 70 bis 200 nm, insbesondere von 80 bis 170 nm oder von 100 bis 150 nm oder von 120 nm, aufweist.
6. Wässriges Beschichtungsmittel gemäß einem der vorstehenden Sätze, **dadurch gekennzeichnet, dass** das wässrige Beschichtungsmittel 5 bis 25 Gew.%, insbesondere 10 bis 20 Gew% oder 13 bis 18 Gew.%, organischen Füllstoff enthält, jeweils bezogen auf das Gesamtgewicht des Beschichtungsmittels.
7. Wässriges Beschichtungsmittel gemäß einem der vorstehenden Sätze, **dadurch gekennzeichnet, dass** der organische Füllstoff ausgewählt ist aus der Gruppe bestehend aus Polyurethanpartikel, Polymethylmethacrylatpartikel, polymere Mikrohohlkugeln, Cellulosefasern, Textilfasern, Korkmehl und Mischungen davon.
8. Wässriges Beschichtungsmittel gemäß einem der vorstehenden Sätze, **dadurch gekennzeichnet, dass** der organische Füllstoff eine mittlere Partikelgröße von 1 bis 50 µm, insbesondere von 5 bis 40 µm oder von 20 bis 40 µm oder von 25 bis 35 µm oder von 28 bis 33 µm oder von 30 µm, aufweist.
9. Wässriges Beschichtungsmittel gemäß einem der vorstehenden Sätze, **dadurch gekennzeichnet, dass** das Beschichtungsmittel 1 bis 6 Gew.%, insbesondere 2 bis 4 Gew.% Mattierungsmittel enthält, jeweils bezogen auf das Gesamtgewicht des Beschichtungsmittels.
10. Wässriges Beschichtungsmittel gemäß einem der vorstehenden Sätze, **dadurch gekennzeichnet, dass** das Mattierungsmittel ausgewählt ist aus der Gruppe bestehend aus pyrogene Kieselsäure, Polymethylharnstoff, keramische Mikrokugeln, Diatomeenerde, Quarzmehle, Talkum und Wachsadditive wie Polyethylenwachse.
11. Wässriges Beschichtungsmittel gemäß einem der vorstehenden Sätze, **dadurch gekennzeichnet, dass** das Mattierungsmittel eine mittlere Partikelgröße von 1 bis 8 µm, insbesondere von 2 bis 6 µm oder von 4 µm, aufweist.
12. Wässriges Beschichtungsmittel gemäß einem der vorstehenden Sätze, **dadurch gekennzeichnet, dass** das Beschichtungsmittel zusätzlich mindestens einen anorganischen Füllstoff und/oder Pigment enthält.
13. Wässriges Beschichtungsmittel gemäß Satz 12, **dadurch gekennzeichnet, dass** das Beschichtungsmittel 1 bis 20 Gew.%, insbesondere 3 bis 17 Gew.% oder 5 bis 15 Gew.% oder 8 bis 12 Gew.%, mindestens einen anorganischen Füllstoff und/oder Pigment enthält, jeweils bezogen auf das Gesamtgewicht des Beschichtungsmittels.
14. Wässriges Beschichtungsmittel gemäß einem der Sätze 12 oder 13, **dadurch gekennzeichnet, dass** der mindestens eine anorganische Füllstoff ausgewählt ist aus der Gruppe bestehend aus Kieselgur, Dolomit, Bariumsulfat, Feldspat, Quarz, Calciumcarbonat, Glimmer, Kaolin, kalziniertes Kaolin, Talkum, Aluminiumsilikate und Mischungen davon.
15. Wässriges Beschichtungsmittel gemäß einem der vorstehenden Sätze, **dadurch gekennzeichnet, dass** das Beschichtungsmittel zusätzlich ein oder mehrere weitere Zusätze und/oder Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Lösungsmittel und Verdicker enthält.
16. Verfahren zur Herstellung eines wässrigen Beschichtungsmittels gemäß einem der Sätze 1 bis 15, umfassend die Schritte
   a. Bereitstellen einer Zusammensetzung enthaltend, jeweils bezogen auf das Gesamtgewicht der Zusammensetzung,
      i. 5 bis 30 Gew.% Polymer mit einer mittleren Partikelgröße von 60 bis 300 nm,
      ii. 2 bis 30 Gew.% organischer Füllstoff,
      iii. 0,5 bis 8 Gew.% Mattierungsmittel mit einer mittleren Partikelgröße von 0,5 bis 9 µm,
      iv. 30 bis 70 Gew.% Wasser,
   b. Dispergieren der in a. genannten Komponenten.
17. Verfahren nach Satz 16**, dadurch gekennzeichnet, dass** die Zusammensetzung 8 bis 17 Gew.%, insbesondere 10 bis 15 Gew.% oder 11 bis 13 Gew.%, Polymer und/oder 5 bis 25, insbesondere 10 bis 20 Gew% oder 13 bis 18 Gew.%, organischen Füllstoff und/oder 1 bis 6 Gew.%, insbesondere 2 bis 4 Gew.%, Mattierungsmittel und/oder zusätzlich mindestens einen anorganischen Füllstoff und/oder Pigment, insbesondere 1 bis 20 Gew.%, insbesondere 3 bis 17 Gew.% oder 5 bis 15 Gew.% oder 8 bis 12 Gew.%, mindestens einen anorganischen Füllstoff und/oder Pigment, enthält, jeweils bezogen auf das Gesamtgewicht der Zusammensetzung.
18. Verfahren nach einem der Sätze 16 oder 17, **dadurch gekennzeichnet, dass** das Polymer gemäß einem der Sätze 3, 4 oder 5 und/oder der organische Füllstoff gemäß einem der Sätze 7 oder 8 und/oder das Mattierungsmittel gemäß einem der Sätze 10 oder 11 und/oder der anorganische Füllstoff gemäß Satz 14 definiert ist und/oder die Zusammensetzung ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Lösungsmittel und Verdicker enthält.
19. Wässriges Beschichtungsmittel erhältlich nach einem Verfahren gemäß einem der Sätze 16 bis 18.
20. Verwendung eines wässrigen Beschichtungsmittels gemäß einem der Sätze 1 bis 15 oder 19 als Dispersionsfarbe für den Innen- und/oder Außenbereich.

## Patentansprüche

1. Wässriges Beschichtungsmittel enthaltend, jeweils bezogen auf das Gesamtgewicht des Beschichtungsmittels,
a. 5 bis 30 Gew.% Polymer mit einer mittleren Partikelgröße von 60 bis 300 nm,
b. 2 bis 30 Gew.% organischer Füllstoff,
c. 0,5 bis 8 Gew.% Mattierungsmittel mit einer mittleren Partikelgröße von 0,5 bis 9 µm,
d. 30 bis 70 Gew.% Wasser.

2. Wässriges Beschichtungsmittel gemäß Anspruch 1, **dadurch gekennzeichnet, dass** das Beschichtungsmittel 8 bis 17 Gew.%, insbesondere 10 bis 15 Gew.% oder 11 bis 13 Gew.%, Polymer enthält, jeweils bezogen auf das Gesamtgewicht des Beschichtungsmittels.

3. Wässriges Beschichtungsmittel gemäß einem der Ansprüche 1 oder 2, **dadurch gekennzeichnet, dass** das Polymer ausgewählt ist aus der Gruppe bestehend aus Polymere basierend auf Carbonsäurevinylester, insbesondere Vinylacetat, Vinylpropionat, N-Vinylpyrrolidon und Derivate hiervon, ungesättigte Carbonsäuren, deren Ester, Amide und Anhydride, insbesondere Acrylsäure und Methacrylsäure sowie deren Ester und Amide, und ethylenisch ungesättigte Verbindungen wie Acrylnitril, Vinylchlorid, Styrol, und Copolymere der vorgenannten Monomere, Polyurethane, Polyester-Polyurethane und Mischungen davon.

4. Wässriges Beschichtungsmittel gemäß einem der vorstehenden Ansprüche, **dadurch gekennzeichnet, dass** das Polymer in Form einer wässrigen Dispersion mit einem Feststoffgehalt von 40 bis 70 Gew.-%, insbesondere 45 bis 60 Gew.-% oder 45 bis 55 Gew.-% oder 50 Gew.%, vorliegt, insbesondere mit einer Brookfield Viskosität bei 25°C von 1000 bis 10000 mPas, insbesondere von 1500 bis 8000 mPas, und/oder einem pH Wert von 7 bis 11,4, insbesondere von 8 bis 9, und/oder eine Glasübergangstemperatur T_{g}, gemessen nach DIN EN ISO 16805:2005-07, von -20 bis 20°C, insbesondere von -10 bis 10°C oder von -5 bis 5 °C oder von 0 bis 5 °C, aufweist und/oder ein Styrolacrylat-Copolymer ist.

5. Wässriges Beschichtungsmittel gemäß einem der vorstehenden Ansprüche, **dadurch gekennzeichnet, dass** das Polymer eine mittlere Partikelgröße von 70 bis 200 nm, insbesondere von 80 bis 170 nm oder von 100 bis 150 nm oder von 120 nm, aufweist und/oder dass das wässrige Beschichtungsmittel 5 bis 25 Gew.%, insbesondere 10 bis 20 Gew% oder 13 bis 18 Gew.%, organischen Füllstoff enthält, jeweils bezogen auf das Gesamtgewicht des Beschichtungsmittels.

6. Wässriges Beschichtungsmittel gemäß einem der vorstehenden Ansprüche, **dadurch gekennzeichnet, dass** der organische Füllstoff ausgewählt ist aus der Gruppe bestehend aus Polyurethanpartikel, Polymethylmethacrylatpartikel, polymere Mikrohohlkugeln, Cellulosefasern, Textilfasern, Korkmehl und Mischungen davon.

7. Wässriges Beschichtungsmittel gemäß einem der vorstehenden Ansprüche, **dadurch gekennzeichnet, dass** der organische Füllstoff eine mittlere Partikelgröße von 1 bis 50 µm, insbesondere von 5 bis 40 µm oder von 20 bis 40 µm oder von 25 bis 35 µm oder von 28 bis 33 µm oder von 30 µm, aufweist.

8. Wässriges Beschichtungsmittel gemäß einem der vorstehenden Ansprüche, **dadurch gekennzeichnet, dass** das Beschichtungsmittel 1 bis 6 Gew.%, insbesondere 2 bis 4 Gew.% Mattierungsmittel enthält, jeweils bezogen auf das Gesamtgewicht des Beschichtungsmittels und/oder dass das Mattierungsmittel ausgewählt ist aus der Gruppe bestehend aus pyrogene Kieselsäure, Polymethylharnstoff, keramische Mikrokugeln, Diatomeenerde, Quarzmehle, Talkum und Wachsadditive wie Polyethylenwachse und/oder dass das Mattierungsmittel eine mittlere Partikelgröße von 1 bis 8 µm, insbesondere von 2 bis 6 µm oder von 4 µm, aufweist.

9. Wässriges Beschichtungsmittel gemäß einem der vorstehenden Ansprüche, **dadurch gekennzeichnet, dass** das Beschichtungsmittel zusätzlich mindestens einen anorganischen Füllstoff und/oder Pigment enthält und/oder dass das Beschichtungsmittel 1 bis 20 Gew.%, insbesondere 3 bis 17 Gew.% oder 5 bis 15 Gew.% oder 8 bis 12 Gew.%, mindestens einen anorganischen Füllstoff und/oder Pigment enthält, jeweils bezogen auf das Gesamtgewicht des Beschichtungsmittels und/oder dass der mindestens eine anorganische Füllstoff ausgewählt ist aus der Gruppe bestehend aus Kieselgur, Dolomit, Bariumsulfat, Feldspat, Quarz, Calciumcarbonat, Glimmer, Kaolin, kalziniertes Kaolin, Talkum, Aluminiumsilikate und Mischungen davon.

10. Wässriges Beschichtungsmittel gemäß einem der vorstehenden Ansprüche, **dadurch gekennzeichnet, dass** das Beschichtungsmittel zusätzlich ein oder mehrere weitere Zusätze und/oder Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Lösungsmittel und Verdicker enthält.

11. Verfahren zur Herstellung eines wässrigen Beschichtungsmittels gemäß einem der Ansprüche 1 bis 10, umfassend die Schritte
a. Bereitstellen einer Zusammensetzung enthaltend, jeweils bezogen auf das Gesamtgewicht der Zusammensetzung,
i. 5 bis 30 Gew.% Polymer mit einer mittleren Partikelgröße von 60 bis 300 nm,
ii. 2 bis 30 Gew.% organischer Füllstoff,
iii. 0,5 bis 8 Gew.% Mattierungsmittel mit einer mittleren Partikelgröße von 0,5 bis 9 µm,
iv. 30 bis 70 Gew.% Wasser,
b. Dispergieren der in a. genannten Komponenten.

12. Verfahren nach Anspruch 11**, dadurch gekennzeichnet, dass** die Zusammensetzung 8 bis 17 Gew.%, insbesondere 10 bis 15 Gew.% oder 11 bis 13 Gew.%, Polymer und/oder 5 bis 25, insbesondere 10 bis 20 Gew% oder 13 bis 18 Gew.%, organischen Füllstoff und/oder 1 bis 6 Gew.%, insbesondere 2 bis 4 Gew.%, Mattierungsmittel und/oder zusätzlich mindestens einen anorganischen Füllstoff und/oder Pigment, insbesondere 1 bis 20 Gew.%, insbesondere 3 bis 17 Gew.% oder 5 bis 15 Gew.% oder 8 bis 12 Gew.%, mindestens einen anorganischen Füllstoff und/oder Pigment, enthält, jeweils bezogen auf das Gesamtgewicht der Zusammensetzung.

13. Verfahren nach einem der Ansprüche 11 oder 12, **dadurch gekennzeichnet, dass** das Polymer gemäß einem der Ansprüche 3, 4 oder 5 und/oder der organische Füllstoff gemäß einem der Ansprüche 6 und/oder 7 und/oder das Mattierungsmittel gemäß Anspruch 8 und/oder der anorganische Füllstoff gemäß Anspruch 9 definiert ist und/oder die Zusammensetzung ein oder mehrere Additive ausgewählt aus der Gruppe bestehend aus Entschäumer, Dispergiermittel, Netzmittel, Konservierungsmittel, Stabilisatoren, Oberflächenschutzmittel, Hydrophobiermittel, Lösungsmittel und Verdicker enthält.

14. Wässriges Beschichtungsmittel erhältlich nach einem Verfahren gemäß einem der Ansprüche 11 bis 13.

15. Verwendung eines wässrigen Beschichtungsmittels gemäß einem der Ansprüche 1 bis 10 oder 14 als Dispersionsfarbe für den Innen- und/oder Außenbereich.
